# EUROPEAN PATENT APPLICATION

(11) **EP 4 714 832 A1**
(43) Date of publication of application: **25.03.2026**
(21) Application number: 25195224.8
(22) Date of filing: 11.08.2025
(51) Int. Cl.: B64D 37/08, B64D 37/30, B60K 15/077

(54) **HYDROGEN TANK WITH ANTI-SLOSHING BAFFLE/S, FUEL TANK ARRANGEMENT, AND AIRCRAFT**

(30) Priority: 24.09.2024 DE 102024127499
(71) Applicant: AIRBUS Operations GmbH, 21129 Hamburg (DE)
(72) Inventor: Siemann, Dr. Martin, 21129 Hamburg (DE); Scheufler, Henning, 21129 Hamburg (DE)
(74) Representative: Marschall, Stefan

(57) **Abstract**

Disclosed are a fuel tank 100, 100", 1001, 1002 of or for an aircraft 1, and an aircraft 1 comprising such fuel tank. The fuel tank is configured to contain liquid hydrogen LH2, and it comprises at least one adjustable anti-sloshing baffle 110, 110', 110". The fuel tank may preferably comprise an adjustment mechanism 130, 130" adapted to adjust the at least one anti-sloshing baffle 110, 110', 110".

Further disclosed is a fuel tank arrangement comprising such fuel tank 100, 100", 1001, 1002 with an adjustment mechanism 130, 130", and a control unit 200 for control of the adjustment mechanism 130, 130".

## Description

The present invention concerns a fuel tank of or for an aircraft, which fuel tank is configured to contain liquid hydrogen. The invention further concerns a fuel tank arrangement and an aircraft respectively comprising such fuel tank.

Aircraft typically comprise one or more fuel tank/s containing a fuel to be supplied to the aircraft's one or more propulsion engines and possibly, if installed, to an auxiliary power unit such as, e.g., a turboshaft engine and/or a fuel cell etc. Different positions are known for the tanks, depending on a respective type and design of the aircraft.

Conventionally, the respective fuel may be an aviation gasoline or a jet fuel, for instance. In order to achieve a considerable emission reduction, alternative propulsion systems for aircraft have been researched for. In this respect, hydrogen-electric aircraft engines, any propulsion engine which includes piston engines, turbine engines of any architecture, and fuel cell powered electrical propulsion motors have emerged as a promising possibility, for instance. In particular, turbo fans and fuel cells/ electric engines respectively driven with hydrogen have been developed as aircraft engines. In either case, considerable space (volume) is needed, in the aircraft, for the hydrogen storage even in the liquid state thereof. Therein, to minimize lost energy due to boil-off, a tank with a large capacity and an advantageous surface-to-volume ratio is advisable.

However, when liquid content in a large pressure vessel enclosing a single tank space becomes only partially filled, there is a risk of sloshing (i.e., of a movement of the liquid inside the vessel), as may occur when the vessel is moved hastily. The sloshing effects that a centre of gravity of the combined tank and liquid may move, thus provoking a dynamic loading. In case of an aircraft's tank, where the hasty movement may occur during manoeuvring of the aircraft, large such moves are detrimental to a steering and control of the movement.

If the content of the vessel is liquid hydrogen, the sloshing may further result in a mixing between the cooler liquid hydrogen from the bottom of the tank with the gaseous hydrogen, which may implicate recondensation and thermodynamic challenges.

In order to mitigate sloshing effects, anti-sloshing walls may be installed in tanks, as disclosed, e.g., in EP 23170281.2.

It is an object of the present invention to provide for an improved fuel storage in an aircraft.

The object is achieved by a fuel tank according to claim 1, by a fuel tank arrangement of claim 7, and by an aircraft according to claim 9. Advantageous embodiments are disclosed in the dependent claims, the description, and the figures.

A fuel tank according to the present invention is a hydrogen tank configured as a fuel tank of or for an aircraft. It is thus constructed as a pressure vessel adapted to contain liquid hydrogen as a fuel to be supplied to at least one (propulsive and/or non-propulsive) engine of the aircraft.

The fuel tank according to the present invention comprises, arranged in its tank space, at least one (actively) adjustable anti-sloshing baffle.

To simplify the language, the attribute "anti-sloshing" to the "baffle" is sometimes omitted herein, i.e., the anti-sloshing baffle/s is/are also briefly referred to as "baffle" only.

By virtue of its adjustability, the at least one baffle may be advantageously actively adaptable to a respective condition (such as a fill state of the fuel tank or a circumstance of its utilisation), so as to respectively optimise its anti-sloshing effect. Thereby, an active damping of a motion of liquid hydrogen the fuel tank may contain is facilitated.

In particular, the present invention advantageously facilitates lessening a dynamic loading resulting from the sloshing and acting on the tank itself (so-called "local loading") and/or on a tank support structure of the fuel tank (so-called "global loading"). Thereby, adverse impacts on the fuel tank, on equipment, and on performance of the aircraft can be avoided, and a particularly lightweight design of the fuel tank is facilitated. Moreover, the baffle/s reduce/s an amount of mixing of hydrogen of different temperatures and/or differently phased hydrogen within the tank space (such as cooler liquid hydrogen from the bottom of the tank space and a gaseous/ vaporised hydrogen formed above the liquid), thereby decreasing a heat/mass transfer, reducing a pressure change within the tank space and, thus, decreasing thermodynamic challenges. In particular, the one or various baffle/s serve/s to reduce a sloshing-induced heat and mass transfer and thus provide for an increased performance of an aircraft comprising the fuel tank.

In particular, the at least one adjustable baffle thus is arranged, in the tank space of the fuel tank, so as to have one or various degree/s of freedom allowing for adjusting the at least one anti-sloshing baffle.

For instance, an adjustment possible for the at least one anti-sloshing baffle may include a tilting thereof (relative to a tank wall of the fuel tank).

Additionally or alternatively, the at least one baffle may be adjustable by changing its position in the tank space of the fuel tank (relative to a/the tank wall of the fuel tank). Thereby, an advantageous adaptation to a respective fill level can be realised. In particular, an effective anti-sloshing may be achieved even with a low number of baffles (and consequently a reduced weight of the fuel tank).

Additionally or alternatively, an adjustment possible for the at least one anti-sloshing baffle may include modifying its diameter; for instance, the at least one baffle in such case may include at least two panels having a smaller diameter than the tank space and being movable relative to each other so as to selectively enlarge or diminish a size of the baffle (by increasingly supplementing or overlapping each other, respectively). Such movement may include a rotation and/or a translation of the panels relative to each other. Such modifiable diameter may be in particular advantageous in embodiments in which a position of the at least one baffle is variable between a narrower region and a wider region of the tank space, as in such case, the diameter of the at least one baffle may be adapted accordingly.

The at least one anti-sloshing baffle may additionally or alternatively be adjustable by rotating the at least one anti-sloshing baffle within the tank space of the fuel tank; this may be in particular advantageous in cases where the respective baffle is rotationally asymmetric.

As a further (alternative or additional) possibility, the at least one baffle may form an at least partially closable passageway, a size and/or shape of which may be variable for adjustment of the baffle; for instance, such baffle may include two or more slices each forming at least one opening, wherein the slices are movable (e.g., rotatable and/or translatable) relative to each other so as to vary an extent to which the respective openings are in line with each other.

Preferably, the fuel tank comprises an adjustment mechanism adapted to (actively) adjust the at least one anti-sloshing baffle.

In particular, such adjustment mechanism may comprise a guiding structure the at least one baffle may be mounted to. Such guiding structure may cross the tank space and/or comprise at least a portion running along a tank wall of the fuel tank. It may include a rod and/or a hollow cylinder, and/or it may be connected to a gear the adjustment mechanism may further comprise. With regard to the fuel tank's designated orientation of installation detailed below, such rod and/or hollow cylinder may preferably run vertically. In embodiments where the fuel tank has a longish shape as mentioned below, the rod and/or hollow cylinder may at least partially or entirely run along a/the longitudinal axis of the fuel tank.

If the fuel tank includes various baffles, at least two of these baffles may be actively adjustable, by means of the adjustment mechanism, synchronously with each other, asynchronously with each other, or selectively synchronously and asynchronously with each other, in particular independently of each other. Such embodiments facilitate achieving a particularly comprehensive suppression of sloshing movements within the tank space. For example, to optimise an effectiveness of the anti-sloshing, the at least two baffles may be (preferably selectively) tiltable in a common direction or in different, in particular opposite directions.

The fuel tank according to the present invention may preferably be configured to be installed in the aircraft in a designated orientation of installation. Said designated orientation is to be perceived as relating to the ground. Indeed, as is to be understood, the aircraft referred to in this definition is assumed to be oriented for horizontal flight. Accordingly, when the fuel tank is installed as intended within the aircraft, it takes its designated orientation (relative to the ground) when the aircraft is oriented for horizontal flight.

As understood in the art, said designated orientation of installation may be constituted, for example, by respective positions of one or various pipes the fuel tank may comprise (e.g., in its tank space), the pipes configured for controlling and collecting boiled off gaseous hydrogen, and/or for collecting liquid hydrogen (e.g., to unload or to supply it to an engine of the aircraft). Additionally or alternatively, said designated orientation may be defined by at least one support element possibly comprised by the fuel tank and configured to support the fuel tank in said designated orientation in a fuselage of the aircraft. Such support element may in particular be configured as a base/ stand supporting the fuel tank against a fuselage reinforcement structure (e.g., frames) of the aircraft, for example.

With regard to the designated orientation of installation of the fuel tank (i.e., when the fuel tank is oriented accordingly), the at least one adjustable anti-sloshing baffle may preferably extend horizontally or be at least adjustable to extend horizontally.

As is to be understood, an anti-sloshing baffle is considered to extend horizontally if it faces downwards with one of its two opposite baffle surfaces respectively spanning a main two-dimensional extension of the respective anti-sloshing baffle.

Such horizontal orientation improves the anti-sloshing baffle's ability to counteract downward and upward movements of liquid hydrogen the fuel tank may contain. In particular, waves occurring in a surface of the liquid hydrogen may strike against at least one of the such oriented baffle/s which thereby may serve to dampen the hydrogen's agitation in a particularly efficient way.

In particular, the one or more adjustable baffle/s comprised by a fuel tank according to the present invention may preferably define two or more stacked sections within the fuel tank, wherein a lower section is connected to an upper section by one or various passageway/s through and/or aside the baffle/s. Accordingly, such lower section may be completely filled even at a reduced filling state of the fuel tank, such that sloshing is in particular suppressed efficiently within the lower section.

According to advantageous embodiments, the fuel tank may comprise various anti-sloshing baffles, at least a first one of which may be mounted, with regard to said orientation designated for installation of the fuel tank, above a second one of the baffles. Accordingly, three or more of said stacked sections may be created, whereby said effects may be achieved even during continued consumption of hydrogen from the fuel tank.

The fuel tank according to the present invention may advantageously be double-walled. In particular, it may comprise an outer hull, an inner tank delimiting the tank space of the fuel tank, and an insulation layer (such as a quasi-vacuum) between the outer hull and the inner tank.

According to advantageous embodiments, the fuel tank may have a longish shape. For example, it may comprise a tubular tank wall whose open ends are closed by respective caps. In particular, such tubular tank wall may comprise a cylindric and/or a conical section.

In these cases, with regard to said designated orientation of installation of the fuel tank, a longitudinal axis (such as a centre axis of said cylindrical and/or conical portion, if applicable) of the fuel tank may extend vertically. Accordingly, the fuel tank may be designated for installation, in the aircraft, in an upright manner (as taught in EP23217785.7). Thereby, said sections can be realised to have a relatively small diameter, such that sloshing movements within the tank are advantageously delimited.

Alternatively, again with regard to said designated orientation of installation of a longish fuel tank, its longitudinal axis may extend horizontally, which may facilitate a particularly advantageous utilisation of the aircraft's volume.

According to advantageous embodiments, at least one of the one or various baffle/s (i.e., the one baffle or at least one of the one or various baffles) of a fuel tank according to the present invention may be arranged in a region which is narrowed as compared to a widest region of the tank space. Accordingly, a respective anti-sloshing effect can be achieved even in such narrow region. For instance, such baffle may be arranged in a dome of the tank or in non-spherical or non-cylindrical part thereof.

A fuel tank arrangement according to the present invention comprises a fuel tank including an adjustment mechanism as detailed above, and a control unit (which may comprise a computer) configured to control the adjustment mechanism so as to automatically adjust the at least one anti-sloshing baffle based on one or various predefined situation-dependent condition/s. Accordingly, the at least one baffle in such embodiment can be systematically adapted to respective situations in accordance with a set of one or various pre-defined rule/s. Thereby, a particularly smart adjustment of the baffle/s may be achieved.

Said situation-dependent condition may include, for example, a respectively current fill level of the fuel tank and/or a respectively detected current gust which the fuel tank (when installed in the aircraft) is subject to (i.e., which acts on the fuel tank).

In particular, if the fuel tank comprises at least two baffles, the control unit may be configured to effect an individual tilting thereof. For instance, in embodiments in which a first one of the baffles is arranged above another one of the baffles, the control unit may be configured to effect a tilting of only the first baffle when the fuel tank is full, and/or tilting only the other baffle when the fuel tank is merely partially filled with liquid hydrogen.

The fuel tank arrangement may further comprise one or various sensor/s configured to repeatedly detect, inside or outside the fuel tank, at least one (respective) current parameter (which thus is prevailing at the respective point of time) the situation dependent condition/s may be based on, and to transmit the respectively detected parameter/s to the control unit.

An aircraft according to the present invention comprises at least one fuel tank according to an embodiment of the present invention, preferably even a fuel tank arrangement according to an embodiment of the present invention.

The fuel tank may preferably be installed, within a fuselage of the aircraft, so as to take a designated orientation of installation (as mentioned above) when the aircraft is oriented for horizontal flight. Preferably, the at least one fuel tank may be installed in an unpressurised aft portion of the fuselage. According to advantageous embodiments, the aircraft comprises at least two fuel tanks each in accordance with a (possibly respective) embodiment of the present invention. Therein, the at least two fuel tanks may be arranged one behind the other in said unpressurised aft portion, such that the aircraft implements a caudal tandem configuration. Additionally or alternatively, the aircraft may comprise at least two fuel tanks in accordance with a (possibly respective) embodiment of the present invention which are arranged side by side in said unpressurised aft portion.

The at least one fuel tank preferably is connected, by a fuel supply system, with at least one propulsive engine and/or at least one non-propulsive engine of the aircraft.

In what follows, preferred embodiments of the present invention are explained with respect to the accompanying drawings. As is to be understood, the various elements and components are depicted as examples only, may be facultative and/or combined in a manner different than that depicted. Reference signs for related elements are to some extent used comprehensively and not necessarily defined again for each figure, and the same holds for evident analogies between the figures.

Shown are schematically in
Fig. 1a: a fuel tank arrangement according to a first exemplary embodiment of the present invention in a first state;
Fig. 1b: the fuel tank arrangement of Figure 1a in a second state;
Fig. 1c: the fuel tank arrangement of Figures 1a and 1b in a third state;
Fig. 2a: a possible anti-sloshing baffle of a fuel tank according to an exemplary embodiment of the present invention;
Fig. 2b: the baffle of Figure 2a in a modified state;
Fig. 3a: a fuel tank according to a further exemplary embodiment according to the present invention in a longitudinal view;
Fig. 3b: the fuel tank of Figure 3a in a transverse view; and
Fig. 4: an aircraft according to an exemplary embodiment of the present invention.

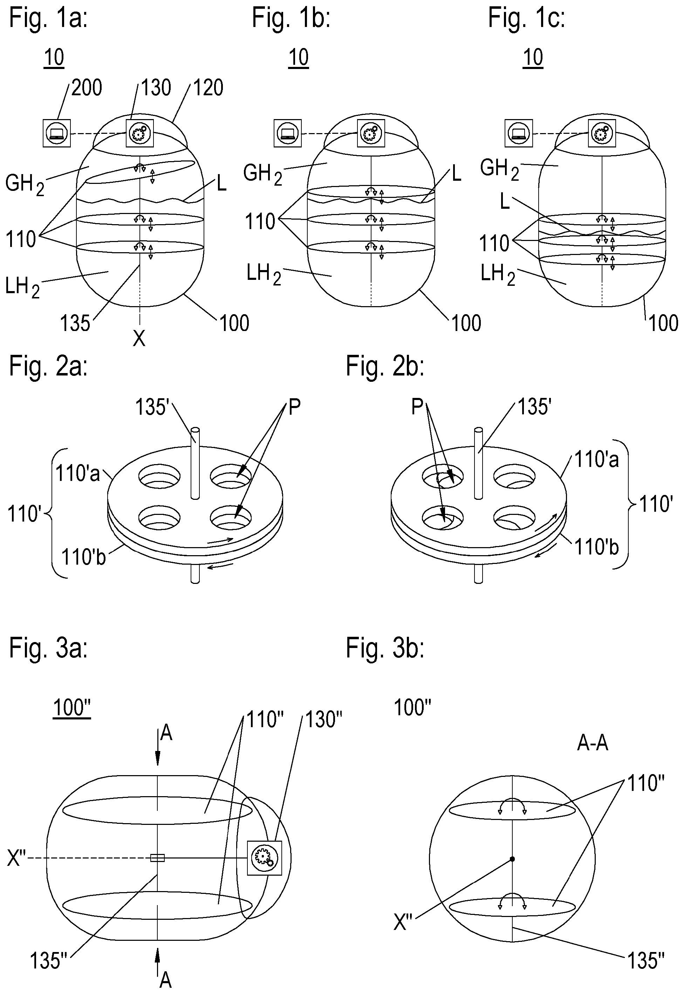

In Figures 1a - 1c, a fuel tank arrangement 10 according to an exemplary embodiment of the present invention is depicted in respective states/ situations.

The fuel tank arrangement 10 comprises a fuel tank 100 according to an exemplary embodiment of the present invention, which fuel tank has a longish shape and is shown in a designated orientation of installation, in which a longitudinal axis X of the fuel tank 100 runs vertically. The fuel tank 100 may in particular be double-walled with an outer hull, an inner tank delimiting a tank space of the fuel tank, and a (e.g., quasi-vacuum) insulation layer between the outer hull and the inner tank (not shown).

In the illustrated example, the fuel tank 100 comprises three anti-sloshing baffles 110, which in this case each are shaped as a respective disc, and an adjustment mechanism 130 with a gear arranged in a capsule 120 of the fuel tank 100 at a top thereof. The adjustment mechanism 130 further comprises a guiding structure 135 running along the longitudinal axis X and thus in particular crossing the inner space of the fuel tank 100. For example, the guiding structure 135 may include a rod and/or a hollow cylinder (not visible in the figures).

Within the tank space of the fuel tank 100, the baffles 110 are mounted one above the other and each at their respective centre to the guiding structure 135. Therein, the baffles 110 each have respective degrees of freedom, as indicated in Figures 1a- 1c by respective double arrows. Accordingly, in the present example, the baffles 110 are tiltable relative to the longitudinal axis X (preferably in each direction around said axis X) and thereby to a tank wall of the fuel tank 100. Moreover, their respective position in the tank space is changeable along the guiding structure 135.

Therein, the adjustment mechanism 130 is configured to adjust the baffles 110 corresponding to their respective degrees of freedom. In particular, in the fuel tank's orientation designated for installation, as shown in Figures 1a - 1c, the baffles can be adjusted so as to extend horizontally. Indeed, Figures 1b and 1c show each baffle aligned accordingly, whereas in the situation shown in Figure 1a, only the two lowest baffles 110 extend horizontally, while the upmost one is currently tilted. In particular, at least the upmost one of the baffles 110 thus can be adjusted asynchronously to the lower ones of the baffles 110.

As apparent from Figures 1a - 1c, the baffles 110 define four stacked sections within the fuel tank 100, wherein the sections are variable due to the adjustability of the baffles 110 and connected to each other by passageways through and/or aside the baffles (not visible in Figures 1b, 1c and only visible for the upmost baffle 110 in Figure 1a).

In the situations shown in Figures 1a - 1c, the fuel tank 100 contains liquid hydrogen LH₂ and gaseous hydrogen GH₂. Therein, Figures 1a and 1b show the fuel tank with a higher fill level (of liquid hydrogen) than Figure 1c. As compared to the situation shown in Figure 1a, in the state depicted in Figure 1b, the upmost one of the baffles has been moved downwards, along the centre axis X, to the vicinity of a surface L of the liquid hydrogen LH₂ up to touching said surface L.

Thereby, the two lowest sections of the tank space are completely filled with liquid hydrogen LH₂, the second section from above is at least almost filled with liquid hydrogen LH₂, and the upmost section is at least almost completely filled with gaseous hydrogen GH₂. As a consequence, an improved anti-sloshing effect is achieved.

In the situation shown in Figure 1c, the baffles 110 have been further moved downwards to adapt to the further reduced fill level of the fuel tank 100. Thereby, the lowest three sections in the fuel tank are diminished to achieve an improved anti-sloshing at this reduce fill level state.

To accordingly facilitate such smart adaptation and control the adjustment mechanism 130 so as to automatically adjust the baffles 110 based on the fill level, the fuel tank arrangement 10 shown in Figures 1a - 1b comprises a control unit 200. The control unit 200, which includes a computer, may further be configured to control the adjustment mechanism 130 based on at least one other predefined situation-dependent condition such as a respective gust acting on the fuel tank (in particular, when installed in the aircraft).

According to advantageous embodiments, the fuel tank arrangement comprises at least one sensor (not shown) configured to repeatedly detect at least one (respective) current parameter (e.g., a current tank fill level and/or a gust) the situation dependent condition/s is/are based on, and to transmit the respectively detected (and current) parameter/s to the control unit 200.

Figures 2a, 2b show, in respective situations, a possible configuration at least one baffle 110' a fuel tank according to the present invention may comprise. The baffle 110' comprises two slices 110'a, 110'b which are rotatable relative to each other about a guiding structure 135' the baffle 110' is mounted to.

In the exemplary embodiment depicted, both slices 110'a, 110'b have four openings which in the exemplary embodiment shown each are disk-shaped. According to alternative embodiments, at least one of such opening/s may have a different shape such as a polygonal, in particular a triangular shape.

In the situation shown in Figure 2a, the openings of slice 110'a each are in line with a respective opening of slice 110'b. Thereby, passageways P through the baffle 110 are formed.

As compared to this situation, Figure 2b shows a state in which the slices 110'a, 110'b have been rotated relative to each other, whereby an extent to which the respective openings are in line with each other has been diminished. As a consequence, a respective size of the passageways P is reduced, such that they are partially closed and a shape of the passageways P is modified.

Figures 3a, 3b illustrate a fuel tank 100'' according to a further exemplary embodiment of the present invention. Therein, the fuel tank 100'' is shown in its designated orientation of installation which in this case is such that a longitudinal axis X'' of the longish fuel tank 100'' runs horizontally. In Figure 3a, said axis X" runs along the image plane, whereas Figure 3b provides a transverse view of the fuel tank 100'', in which the axis X'' is orthogonal to the image view. Again, the fuel tank 100'' may advantageously be double-walled with an outer hull, an inner tank delimiting the tank space of the fuel tank, and a (e.g., quasi-vacuum) insulation layer between the outer hull and the inner tank (not shown).

The fuel tank 100'' shown in Figures 3a, 3b comprises two adjustable baffles 110" which each are mounted, with a respective degree of freedom, to a guiding structure 135" of an adjustment mechanism 130".

Therein, the respective diameter of each baffle 110'' is smaller than an inner tank diameter, whereby an arrangement of the baffles 110" respectively above or below a widest region of the fuel tank 100" (and thus in a region which is narrowed as compared to said widest region) is facilitated. Accordingly, a beneficial anti-sloshing effect can be achieved also outside a centre of the fuel tank 100".

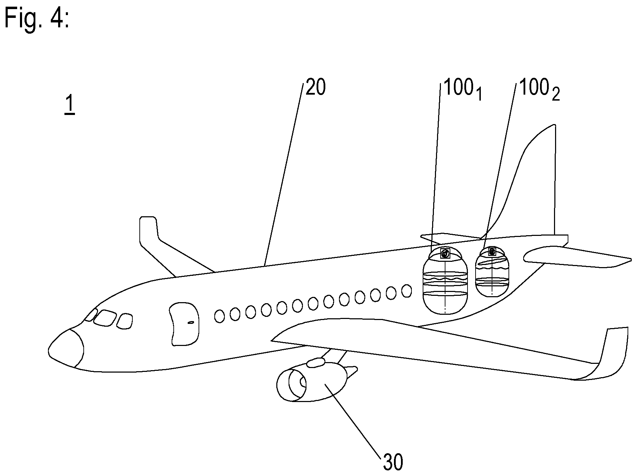

Figure 4 shows an aircraft 1 according to an exemplary embodiment of the present invention, the aircraft 1 comprising two fuel tanks 100₁, 100₂ which in this case are configured as is the fuel tank 100 shown in Figures 1a - 1c and described above. The fuel tanks 100₁, 100₂ are arranged, in a caudal tandem configuration and each in an upright orientation, in a fuselage 20 of the aircraft 1.

Preferably, a supply system (not shown) of the aircraft is configured to supply at least one engine 30 of the aircraft with liquid hydrogen from the fuel tanks 100₁, 100₂.

The respective baffles within the fuel tanks 100₁, 100₂ and their associated adjustment mechanism facilitate an active damping of a motion of the liquid hydrogen they respectively contain. Thereby, the baffles serve to reduce a sloshing-induced heat and mass transfer and thus provide for an increased performance of the aircraft 1.

Disclosed are a fuel tank 100, 100'', 100₁, 100₂ of or for an aircraft 1, and an aircraft 1 comprising such fuel tank. The fuel tank is configured to contain liquid hydrogen LH₂, and it comprises at least one adjustable anti-sloshing baffle 110, 110', 110". The fuel tank may preferably comprise an adjustment mechanism 130, 130" adapted to adjust the at least one anti-sloshing baffle 110, 110', 110".

Further disclosed is a fuel tank arrangement comprising such fuel tank 100, 100", 100₁, 100₂ with an adjustment mechanism 130, 130", and a control unit 200 for control of the adjustment mechanism 130, 130".

### Reference signs

- 1: aircraft
- 10: fuel tank arrangement
- 20: fuselage
- 30: engine
- 100, 100", 100₁,: 100₂fuel tank
- 110, 110', 110" 110'a, 110'b: anti-sloshing baffle
- 120: capsule
- 130, 130": adjustment mechanism
- 135, 135',: 135''guiding structure
- 200: control unit
- GH₂: gaseous hydrogen
- L: surface of liquid hydrogen
- LH₂: liquid hydrogen
- P: passageway
- X, X": longitudinal axis

## Claims

1. Fuel tank (100, 100", 100₁, 100₂) of or for an aircraft (1), the fuel tank configured to contain liquid hydrogen (LH₂) and comprising, in its tank space, at least one anti-sloshing baffle (110, 110', 110") which is adjustable.

2. Fuel tank according to claim 1, wherein the at least one anti-sloshing baffle is adjustable by
- tilting the at least one anti-sloshing baffle (110, 110', 110") relative to a tank wall of the fuel tank, and/or
- changing a position of the at least one anti-sloshing baffle (110, 110', 110") in the tank space of the fuel tank, and/or
- modifying a diameter of the at least one anti-sloshing baffle (110, 110', 110"), and/or
- varying a size of at least one at least partially closable passageway (P) formed in the at least one anti-sloshing baffle (110'), and/or
- varying a shape of at least one at least partially closable passageway (P) formed in the at least one anti-sloshing baffle (110'), and/or
- rotating the at least one anti-sloshing baffle (110, 110', 110") within the fuel tank.

3. Fuel tank according to one of claims 1 or 2, wherein the at least one anti-sloshing baffle is mounted to a guiding structure (135) which crosses the tank space and/or which at least partially runs along a tank wall of the fuel tank.

4. Fuel tank according to one of the preceding claims, further comprising an adjustment mechanism (130, 130") adapted to adjust the at least one anti-sloshing baffle (110, 110', 110") within the tank space.

5. Fuel tank according to claim 4, wherein the fuel tank comprises at least two anti-sloshing baffles (110, 110', 110") which are adjustable, by the adjustment mechanism (130, 130"), independently from each other.

6. Fuel tank according to one of the preceding claims, wherein the fuel tank has a longish shape, and a designated orientation of installation in the aircraft which is such that
- a longitudinal axis (X) of the fuel tank runs vertically or
- a longitudinal axis (X") of the fuel tank runs horizontally.

7. Fuel tank arrangement (10) comprising a fuel tank (100, 100", 100₁, 100₂) according to one of the preceding claims, and a control unit (200) configured to control the adjustment mechanism (130, 130") so as to automatically adjust the at least one anti-sloshing baffle (110, 110', 110") based on one or various predefined situation-dependent condition/s.

8. Fuel tank arrangement according to claim 7, wherein the situation-dependent condition/s comprise
- a respectively current fill level of the fuel tank (100, 100", 100₁, 100₂) and/or
- a respectively current gust acting on the fuel tank (100, 100", 1001, 1002).

9. Aircraft (1) comprising a fuel tank (100, 100", 100₁, 100₂) according to one of claims 1 to 6.
